# EUROPEAN PATENT SPECIFICATION

(11) **EP 0 599 467 B1**
(45) Date of publication and mention of the grant of the patent: **14.07.1999**
(21) Application number: 93307900.6
(22) Date of filing: 05.10.1993
(51) Int. Cl.: C11D 13/18, B29C 47/20

(54) **Improvements in soft solid processing and apparatus for said processing**
Verbesserung der Bearbeitung weicher Feststoffe und Vorrichtung für diese Bearbeitung
Perfectionnement dans le traitement de solides moux et dispositif pour ce traitement

(30) Priority: 24.11.1992 GB 9224626
(43) Date of publication of application: 01.06.1994
(73) Proprietor: UNILEVER PLC, London EC4P 4BQ (GB); UNILEVER N.V., 3013 AL Rotterdam (NL)
(72) Inventor: Manoharan, Mohan, 1C Agrasar, Hin. Lever R. C. C., Bombay 400 099 (IN); Naik, Vijay Mukund, Nandadeep Coop. Housing Soc., Bombay 400 063 (IN)
(74) Representative: Elliott, Peter William

(56) References cited:
- DE-A- 2 151 843
- GB-A- 935 200
- GB-A- 2 108 144
- GB-A- 190 201 430

## Description

### Field of the Invention

The present invention relates to improvements in soft solids processing and apparatus for said processing. While the invention will be described with particular reference to the manufacture of detergent bars, tablets and the like wherein the term 'detergent' is meant to embrace both soap and synthetic detergents, the invention is not restricted to said processes and extends to the processing of other soft solids.

### Background to the Invention

Extrusion is a common procedure in soft solids processing. In the manufacture of soap bars, extruders, commonly known as 'plodders', are used to form bars or billets of soap. Similar processes are applied in the processing of non-soap detergents, metals, clays, ceramics and foodstuffs, either in a molten or a solid state. The apparatus for extrusion processing comprises an extruder die which can include a pressure plate.

The processing of soft solids in extruders/plodders involves their deformation to various stress and strain levels, and probably also a range of temperatures. The processing of these soft solids is done within the confined conditions of the extruder and hence the deformation is controlled by the geometric constraints imposed on the material. In the screw type extruder, the material is constrained to flow in shear (with a range of velocities) between the rotating screw and the stationary barrel and in the ram type extruder it is primarily subjected to compressive stresses. As the material exits the barrel portion and enters the pressure plate, the area reduction imposed by the pressure plate produces a back pressure which is usually required for proper mixing and homogeneity and to avoid air entrapment in the final product.

Details of the plodders used in the manufacture of detergent bars are found in literature, for example in Woollatt's, 'The manufacture of soaps, other detergents and glycerine' (Ellis Horwood, 1985) on pages 247-255. It can been seen from the literature that the pressure plate is provided with a plurality of parallel-sided circular apertures, i.e. round holes, through which extrusion occurs. The apertures are typically arranged in a regular, often hexagonal array and, in use, materials flows through these holes into a cone which forms the material into a bar or billet. In the manufacture of detergent bars this bar or billet is typically cut into shorter lengths for optional further processing, distribution and sale.

A known problem with extruded products, and in particular with detergent bars is 'cracking'. Cracking is believed to be a particular problem in products which are prepared using a pressure plate as described above.

DE-A-2 151 843 and GB-A-935,200 disclose apparatus for the manufacture of detergent bars, however in the most pertinent variants of extruder described in these documents the apertures are slits, which themselves radiate diametrically outwards from the centre of a pressure plate.

### Brief Description of the Invention

We have determined that the incidence of cracking can be reduced by modification of the pressure plate such that the apertures in the pressure plate are concentric slits rather than round holes or slits radiating diametrically outwards from the centre of the pressure plate.

Without wishing to limit the invention by reference to any theory of operation it is believed that the provision of slits reduces the incidence of contact between planes of weakness in the final product thereby reducing the tendency towards cracking. It is also believed that the homogeneity of the final product is improved by the use of a method and apparatus according to the present invention.

### Detailed Description of the Invention

Accordingly, a first aspect of the present invention provides a pressure plate for an extruder, wherein said pressure plate comprises a plate having an inner and an outer surface and defining a plurality of apertures therethrough, CHARACTERISED IN THAT said apertures are slits disposed concentrically.

Generally, the slits are circular and of constant curvature along their angular length. Other configurations, such as polygonal, wave-like, corrugated or spirally arranged slits can be envisaged.

Typically, the plate is configured such that the slits provide a porosity of 10-60%. By use of plates having a porosity in this range the desired back-pressure can be attained.

Conveniently, two or more supporting ribs bridge each said slit. As will be illustrated hereinafter by way of example, two, three or four bridging ribs are preferred, thereby providing the plate with the required degree of stuctural strength.

These ribs may be radially aligned, although it is preferable that the ribs are at least in part radially staggered so as to reduce the potential for contact between planes of weakness in the final product.

In preferred embodiments of the invention the ribs are co-terminous with the inner surface of the plate.

In particularly preferred embodiments of the invention the ribs narrow towards the outer surface of the plate such that circumferentially adjacent slits merge at or before the outer surface of the plate to provide smooth flow paths for material flowing through the slits.

A further aspect of the present invention subsists in a plodder comprising a pressure plate according to the first above-mentioned aspect of the invention.

A yet further aspect of the present invention subsists in a process for the manufacture of detergent bars including the step of extruding said detergent through a pressure plate according to the first above-mentioned aspect of the invention.

The invention will now be described by way of illustration only with reference to the accompanying drawings, in which:

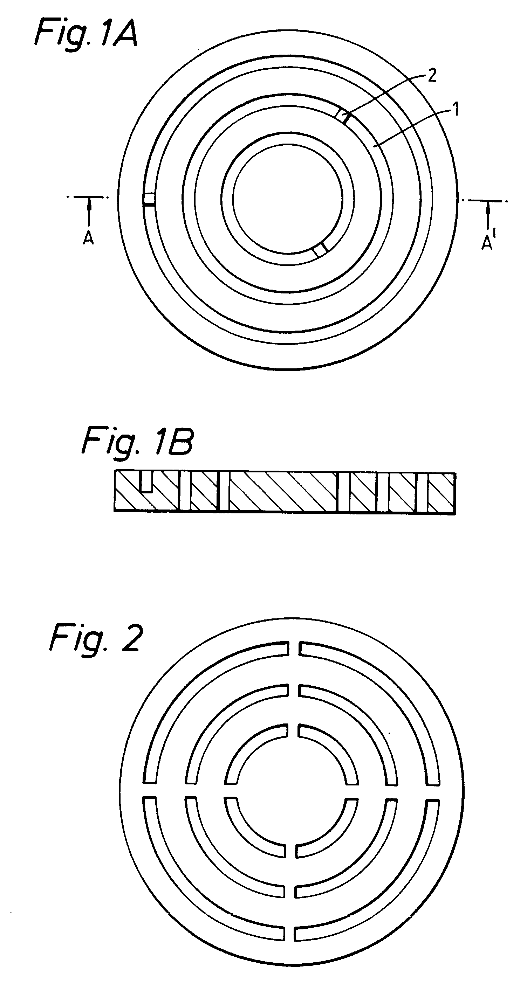

Figs. 1A and 1B show views of the pressure plate according to an embodiment of the present invention;
Fig. 2 shows the pressure plate with the ribs in radial alignment;
Fig.3 shows the pressure plate with the ribs staggered from each other;
   and
Figs. 4A, 4B and 4C show the pressure plate with tapered slits and tapered ribs.

Referring to the drawings, the pressure plate shown possesses a circular symmetry and so does the cone (not shown) into which the material emerges. The plate is provided with a plurality of concentric circular slits 1 with a total open area sufficient to create the desired back pressure. As the material is forced through such a plate, it emerges out in the form of a plurality of concentric cylinders which in the cone get compressed in a telescopic fashion into a homogenous final product.

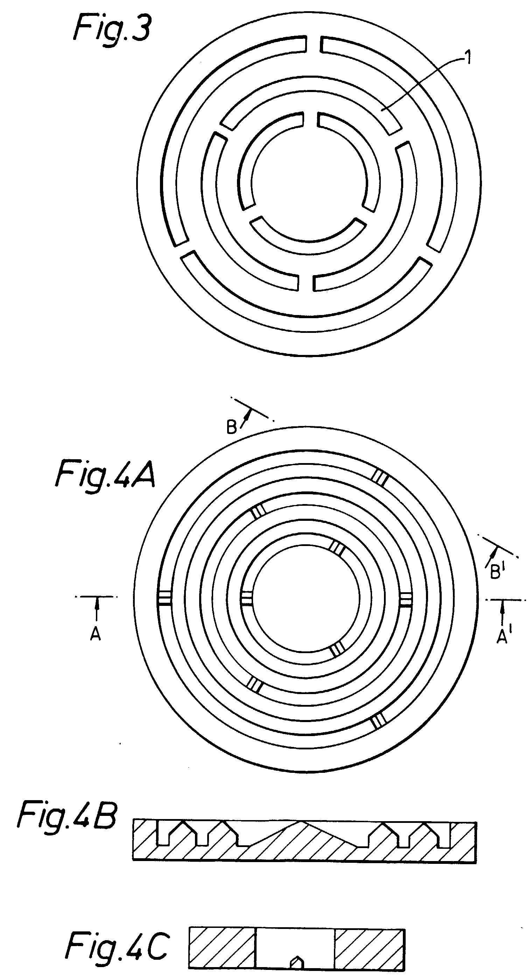

The concentric circular slits 1 have to be supported and held together, and this is achieved by the ribs 2. The ribs may be either aligned radially as shown in Fig. 2 or may be staggered as shown in Fig. 3. The ribs are tapered (see Fig. 4) to provide smooth flow paths as well as to ensure that as the material emerges into the cone, it does so in the form of concentric circular candles or noodles. The slits are also tapered circumferentially (see Fig. 4) so that the material emerging from the concentric slits merge smoothly without the presence of any dead zone.

The alternate designs for the pressure plate outlined above were tested on a laboratory scale 3" single screw plodder. In order to better understand the crack pattern, the billets produced from a commercial soap formulation were subjected to an alcohol immersion test. In this test, the billets are first immersed in water for an hour followed by and hour's immersion in alcohol. After these two soaks, the billets were allowed to dry. On drying, the cross-section of the billet reveals the crack pattern. It was found that the control pressure plate with the conventional holes produced cracks which were continuous from the surface to the center, and this would be detrimental during use due to the deep ingress of water. The pressure plates with slits according to the invention, however, showed circumferential and disconnected cracks, which would prevent continuity of cracking.

A trial soap formulation susceptible to cracking was plodded using the conventional and alternate pressure plates according to the invention. The billets were then subjected to the accelerated cracking test, i.e. immerse the samples in water for half an hour, dry for twenty three-and-half hours and then repeat the cycle for five days. The results are shown in Table 1 below:

**TABLE 1**

| | **CONTROL** | **ALIGNED SLITS** **(Fig. 2)** | **STAGGERED SLITS** **(Fig. 3)** | **CIRCULAR AND TAPERED SLITS** **(Fig. 4)** |
|---|---|---|---|---|
| 1st day | 8 | 7 | 6 | 1 |
| 3rd day | 9 | 8 | 7 | 2 |
| 5th day | 10 | 8 | 8 | 2 |

It can be clearly seen from Table 1 above that there is reduction in cracking score in all the slit based pressure plates, and the plate with circular and tapered slits shows the maximum reduction.

## Claims

1. A pressure plate for an extruder, wherein said pressure plate comprises a plate having an inner and an outer surface and defining a plurality of apertures there-through, CHARACTERISED IN THAT said apertures are slits disposed concentrically.

2. A pressure plate as claimed in claim 1, wherein the slits are circular and of constant curvature along their angular length.

3. A pressure plate as claimed in either claim 1 or claim 2, wherein that the slits provide a porosity of 10-60%.

4. A pressure plate as claimed in any preceding claim, wherein two or more supporting ribs bridge each said slit.

5. A pressure plate as claimed in claim 4, wherein the ribs are at least in part radially staggered.

6. A pressure plate as claimed in either claim 4 or claim 5, wherein the ribs are co-terminous with the inner surface of the plate.

7. A pressure plate as claimed in any of claims 4-6, wherein the ribs narrow towards the outer surface of the plate such that circumferentially adjacent slits merge at or before the outer surface of the plate.

8. A plodder comprising a pressure plate as claimed in any preceding claim.

9. A process for the manufacture of detergent bars including the step of extruding said detergent through a pressure plate as claimed in any of claims 1-7.

## Patentansprüche

1. Lochscheibe für einen Extruder, wobei die besagte Lochscheibe eine Platte umfasst, die eine Innen- und eine Außenseite aufweist und eine Mehrzahl von durchgehenden Öffnungen begrenzt, DADURCH GEKENNZEICHNET, DASS die besagten Öffnungen konzentrisch angeordnete Schlitze sind.

2. Lochscheibe nach Anspruch 1, bei der die Schlitze kreisförmig und entlang ihrer Bogenlänge von konstanter Krümmung sind.

3. Lochscheibe nach Anspruch 1 oder Anspruch 2, bei der die Schlitze eine Durchlässigkeit von 10-60 % liefern.

4. Lochscheibe nach einem vorangehenden Anspruch, bei der zwei oder mehr Halterippen jeden besagten Schlitz überbrücken.

5. Lochscheibe nach Anspruch 4, bei der die Rippen mindestens teilweise radial versetzt sind.

6. Lochscheibe nach Anspruch 4 oder Anspruch 5, bei der die Rippen gemeinsam mit der Innenseite der Platte enden.

7. Lochscheibe nach einem der Ansprüche 4-6, bei der die Rippen in Richtung der Außenseite der Platte schmaler werden, so dass sich in Umfangsrichtung benachbarte Schlitze an oder vor der Außenseite der Platte vereinigen.

8. Strangpressvorrichtung, umfassend eine Lochscheibe nach einem beliebigen vorangehenden Anspruch.

9. Verfahren zur Herstellung von Detergens-Strängen oder Riegeln, einschließend den Schritt eines Extrudierens des besagten Detergens durch eine Lochscheibe nach einem der Ansprüche 1-7.

## Revendications

1. Une plaque de pression pour une extrudeuse, dans laquelle ladite plaque de pression comporte une plaque présentant une surface intérieure et extérieure et définissant une pluralité d'ouvertures à travers celle-ci, caractérisée en ce que lesdites ouvertures sont des fentes disposées concentriquement.

2. Une plaque de pression selon la revendication 1, dans laquelle les fentes sont circulaires et de courbure constante le long de leur longueur angulaire.

3. Une plaque de pression selon la revendication 1 ou 2, dans laquelle les fentes fournissent une porosité comprise entre 10 et 60 %.

4. Une plaque de pression selon l'une quelconque des revendications précédentes, dans laquelle deux nervures de support ou plus relient chacune desdites fentes.

5. Une plaque de pression selon la revendication 4, dans laquelle les nervures sont décalées radialement au moins pour partie.

6. Une plaque de pression selon la revendication 4 ou 5, dans laquelle les nervures présentent une terminaison conjointe avec la surface intérieure de la plaque.

7. Une plaque de pression selon l'une quelconque des revendications 4 à 6, dans laquelle les nervures se rétrécissent en direction de la surface extérieure de la plaque de telle sorte que les fentes périphériquement adjacentes se rejoignent au niveau ou avant la surface extérieure de la plaque.

8. Une boudineuse comprenant une plaque de pression telle que revendiquée dans l'une quelconque des revendications précédentes.

9. Un procédé de fabrication de barres détergentes comprenant l'étape consistant à extruder ledit détergent à travers une plaque de pression telle que revendiquée dans l'une quelconque des revendications 1 à 7.
